# EUROPÄISCHE PATENTSCHRIFT

(11) **EP 4 112 983 B1**
(45) Veröffentlichungstag und Bekanntmachung des Hinweises auf die Patenterteilung: **23.10.2024**
(21) Anmeldenummer: 22181510.3
(22) Anmeldetag: 28.06.2022
(51) Int. Cl.: F16K 31/06, F16K 27/04, F15B 13/044, F15B 13/04

(54) **VENTIL UND ANSCHLUSSBAUTEIL MIT EINEM SOLCHEN VENTIL**
VALVE AND CONNECTION COMPONENT WITH SUCH A VALVE
SOUPAPE ET COMPOSANT DE RACCORDEMENT AVEC UNE TELLE SOUPAPE

(30) Priorität: 02.07.2021 DE 102021003430
(43) Veröffentlichungstag der Anmeldung: 04.01.2023
(73) Patentinhaber: Hydac Fluidtechnik GmbH, 66280 Sulzbach/Saar (DE)
(72) Erfinder: Kattler, Frank, 66346 Püttlingen (DE); Groh, Christian, 66453 Gersheim (DE); Schulz, Frank, 66440 Blieskastel-Bierbach (DE)
(74) Vertreter: Bartels und Partner, Patentanwälte

(56) Entgegenhaltungen:
- WO-A1-2015/036076
- DE-A1- 102014 004 796
- DE-A1- 102014 015 559
- DE-A1- 19 818 112
- DE-A1- 4 310 984

## Beschreibung

Die Erfindung betrifft ein Anschlussbauteil mit einem Ventil, insbesondere 3/2 Wegeventil, mit den Merkmalen des Oberbegriffs des Anspruchs 1.

Durch DE 10 2018 000 450 A1 ist ein Betätigungsmagnet bekannt, mit einem einen Mantel aufweisenden Magnetgehäuse und mit mindestens einem im Magnetgehäuse angeordneten Spulenkörper, der bei Bestromung einen Magnetanker zumindest in einer Richtung längs einer Betätigungsachse verfährt, wobei der Mantel des Magnetgehäuses entlang seiner Längserstreckung parallel zur Betätigungsachse und im Querschnitt gesehen an mindestens einer Stelle eine Materialanhäufung aufweist, die von der sonstigen Materialverteilung im Mantel des Magnetgehäuses abweicht. Das für den Rückfluss durch das einen Teil des magnetischen Eisenkreises bildende Magnetgehäuse zusätzlich zur Verfügung gestellte Material führt zu einer Erhöhung der effektiven Magnetkraft und dadurch, dass die Materialanhäufung von der sonstigen Materialverteilung im Mantel des Magnetgehäuses abweicht, kann die Außenabmessung, gemessen in der Montagerichtung mehrerer aufeinanderfolgend einzubauender Betätigungsmagnete, unverändert belassen werden, so dass die Erhöhung der Magnetkraft nicht durch eine Vergrößerung der Montagebreite erkauft werden braucht.

Solche Betätigungsmagnete dienen regelmäßig dazu, Ventilkolben von Fluidventilen anzusteuern. Ein solches Ventil in Form eines 3/2-Wegeventiles ist beispielhaft durch DE 10 2016 007 881 A1 bekannt, das einen in einem Ventilgehäuse längsverfahrbar angeordneten Ventilkolben aufweist, der drei Anschlussstellen für Fluid aufweist in Form eines Druckversorgungsanschlusses, eines Rücklauf- oder Tankanschlusses und eines Nutzanschlusses. Die bekannte Ventillösung weist eine sogenannte Strömungskraft-Kompensation für den Ventilkolben auf, der im Bereich einer Steuerkante des Ventilgehäuses derart eine Gestaltsänderung von seiner zylindrischen äußeren Grundform aufweist, dass eine Strömungsangriffsfläche für Fluid geschaffen ist, die eine entgegen der Strömungskraft wirkende, kompensierende Krafteinleitung auf den Ventilkolben bewirkt, die den Ventilkolben in eine Öffnungsstellung entgegengesetzt zu der Sperrstellung zu ziehen sucht.

Aufgrund des rotationssymmetrischen Aufbaus des Ventilkolbens und der umfangsseitig am Ventilgehäuse in symmetrischer Weise gegenläufig eingebrachten Druck- und Rücklauffluidanschlüsse sowie dem mittig an der freien Stirnseite des Ventilgehäuses angeordneten Nutzanschluss ist unabhängig davon, welche mögliche Anschlussposition des Ventilgehäuses gegenüber einem Anschlussbauteil, regelmäßig in Form eines Ventilblockes, montageseitig gewählt wird, immer eine funktionssichere Einbausituation realisiert, bei der die Fluidanschlüsse im Ventilgehäuse in fluidführende Deckung mit den zugehörigen Fluidanschlussstellen im Anschlussbauteil kommen. Nachteilig ist jedoch, dass in der axialen Einbaurichtung gesehen die einzelnen Fluidanschlüsse, nämlich die in der Betätigungsachse gesehen diametral einander gegenüberliegenden Druck- und Rücklaufanschlüsse sowie der zentral angeordnete Nutzanschluss, mit axialem Abstand zueinander in das Ventilgehäuse eingebracht sind, und ebenso axial zueinander beabstandet sind die zugehörigen Anschlussstellen im Anschlussbauteil respektive Ventilblock aufgenommen, so dass derart in Längsrichtung gesehen relativ groß aufbauende Ventilkonstruktionen geschaffen sind.

Die DE 10 2014 015 559 A1 beschreibt ein Anschlussbauteil mit einem Ventil, insbesondere ein 3/2-Wegeventil, mit den Merkmalen des Oberbegriffs des Anspruchs 1 mit einem Ventilgehäuse und einem darin längsverfahrbar geführten Ventilkolben, der mittels einer Betätigungsmagneteinrichtung zwischen einer ersten und einer zweiten Kolbenstellung entlang einer Betätigungsachse verfahrbar ist, bei der eine Druckversorgung mit einem Nutzanschluss fluidführend verbunden ist bzw. dieser Nutzanschluss mit einem Rücklauf.

Weitere Ventile gehen aus der DE 43 10 984 A1, der WO 2015/036076 A1, der DE 10 2014 004 796 A1 und der DE 198 18 112 A1 hervor.

Ausgehend von diesem Stand der Technik liegt der Erfindung die Aufgabe zugrunde, ein Anschlussbauteil mit einem Ventil, insbesondere in Form eines 3/2-Wegeventils, zu schaffen, wobei das Ventil einen funktionssicheren Einbau in das Anschlussbauteil, wie einem Ventilblock, bei gleichzeitig verringerten Einbaumaßen ermöglicht.

Die dahingehende Aufgabe löst ein Anschlussbauteil mit einem Ventil mit den Merkmalen des Patentanspruches 1 in seiner Gesamtheit.

Erfindungsgemäß ist dabei vorgesehen, dass nach einem vorgebbaren Belegungsplan neben dem Nutzanschluss mehrere Druckversorgungsanschlüsse und mehrere Rücklaufanschlüsse in mindestens einer Ebene quer zur Betätigungsachse derart aus dem Ventilgehäuse austreten, dass unabhängig von einer gewählten möglichen Anschlussposition des Ventilgehäuses an einem Anschlussbauteil respektive Ventilblock einzelne Anschlüsse des Ventilgehäuses in fluidführender Verbindung mit zuordenbaren Anschlussstellen des Anschlussbauteils kommen und die verbleibenden Anschlüsse des Ventilgehäuses fluiddicht von Wandteilen des Anschlussbauteils verschlossen sind; und dass das Anschlussbauteil den Belegungsplan mit einzelnen Anschlussstellen aufweist, von denen sich eine Nutzanschlussstelle an zentraler Stelle des Belegungsplans befindet und sich eine Druckversorgungsanschlussstelle sowie eine Rücklaufanschlussstelle von zentraler Stelle aus gesehen, auf einer horizontalen bzw. vertikal verlaufenden Ebene im Anschlussbauteil befinden. Dergestalt werden die im Stand der Technik im Ventilgehäuse in axialer Richtung parallel zur Betätigungsachse des Ventilkolbens angeordneten Fluidanschlussstellen in mindestens einer Ebene quer zu dieser Betätigungsachse im Ventilkolben neu angeordnet, was insoweit Bauraum einsparen hilft. Dem Grunde nach wird bei der erfindungsgemä-βen Lösung in redundanter Weise ein Belegungsplan mit einer Vielzahl von Anschlüssen vorgesehen, die beim Festlegen des Ventilgehäuses am Anschlussbauteil dann eben nicht alle benötigt werden und die insoweit nicht benötigten Anschlussverbindungen werden von Wandteilen des Anschlussbauteils fluiddicht verschlossen. Dies hat so keine Entsprechung im Stand der Technik.

Bei einer besonders vorteilhaften Ausführungsform des erfindungsgemäßen Anschlussbauteils mit dem entsprechenden Ventil sind sowohl die Druckversorgungsanschlüsse als auch die Rücklauf- oder Tankanschlüsse sowie der Nutzanschluss in einer gemeinsamen Ebene quer zur Betätigungsachse des Ventilkolbens angeordnet. Hierdurch ergibt sich ein besonders einfacher, platzsparender Aufbau.

Es besteht aber auch die Möglichkeit, ausgehend von einer Ebene mit einem Anschluss, die anderen Anschlüsse in jeweils einer weiteren, hiervon verschiedenen gemeinsamen Ebene anzuordnen oder jedem Anschluss eine eigene Ebene zur Verfügung zu stellen, so dass sich, in Längsrichtung des Ventilkolbens gesehen, auch eine gestufte Einbauanordnung für die Einzelanschlüsse ergeben kann. Bei einer Vertikal-Einbaulage des Gesamtventils wäre insoweit die jeweilige Ebene mit ihrem jeweiligen Anschluss in horizontaler Richtung verlaufend im Ventilgehäuse angeordnet.

Bei einer bevorzugten Ausführungsform des erfindungsgemäßen Anschlussbauteils mit dem entsprechenden Ventil ist vorgesehen, dass der Ventilkolben einen Verbindungskanal aufweist, der an seiner dem Nutzanschluss zugewandten Stirnseite in diesen in jeder Kolbenstellung ausmündet, und dass der Verbindungskanal an seiner der Stirnseite abgewandten Seite eine Verbindungsstelle aufweist, die in der einen und der anderen Kolbenstellung in Verbindungskanäle im Ventilgehäuse zum Druckversorgungsanschluss bzw. zum Rücklaufanschluss ausmünden. Dergestalt lässt sich mit nur einem Ventilkolben mit einem einzelnen Verbindungskanal in Längsrichtung gesehen sowie einer zugehörigen Verbindungsstelle in den beiden verschiedenen Kolbenstellungen eine Fluidverbindung herstellen zwischen dem Nutzanschluss und der Druckversorgung bzw. zwischen diesem Nutzanschluss und dem Rücklauf, vorzugsweise in Form eines Tankanschlusses, wobei über die beschriebene Verfahranordnung sichergestellt ist, dass immer die jeweils andere Fluidverbindung sicher gesperrt ist, während die eine Verbindung hergestellt ist.

Bei einer weiteren bevorzugten Ausführungsform des erfindungsgemäßen Anschlussbauteils mit dem entsprechenden Ventil ist vorgesehen, dass das Ventilgehäuse paarweise zu einer Längs- oder Betätigungsachse der Magneteinrichtung diametral einander gegenüberliegende Fluidkanäle aufweist, von denen ein Paar ausgehend von dem jeweiligen Druckversorgungsanschluss zu einer Fluidkammer im Ventilgehäuse führt, in die die Verbindungsstelle des Ventilkolbens in der einen Kolbenstellung ausmündet, und dass das andere Paar von Fluidkanälen ausgehend vom Rücklaufanschluss zu einer weiteren Fluidkammer im Ventilgehäuse führt, in die die Verbindungsstelle des Ventilkolbens in der weiteren Kolbenstellung ausmündet. Dergestalt sind die einzelnen Fluidkanäle mit unterschiedlichen Einbaulängen in platzsparender Weise parallel zueinander im Ventilgehäuse geführt, wobei alle Fluidkanäle von der freien Stirnseite des Ventilgehäuses in dieses eingebracht sind, was sich herstelltechnisch einfach ausführen lässt.

Vorzugsweise ist dabei vorgesehen, dass der Nutzanschluss koaxial zur Längsachse des Ventilkolbens im Ventilgehäuse angeordnet ist und dass die weiteren Anschlüsse in gleichen radialen Abständen voneinander um den Nutzanschluss herumgruppiert sind. Auch dies erlaubt einen platzsparenden Einbau der einzelnen Anschlüsse an der freien Stirnseite des Ventilgehäuses, das der Anschlussbaugruppe in Form des Anschlussbauteils oder Ventilblockes gegenüberliegt.

Um platzsparend eine Fluidverbindung zwischen einzelnen Fluidkanälen und zuordenbaren Fluidkammern herzustellen, können die Längskanäle über entsprechende Querkanäle in die dahingehenden Fluidkammern als Ringkammern, die sich koaxial um den Ventilkolben herum erstrecken, einmünden. Vorzugsweise ist dabei ferner vorgesehen, dass die Fluidkanäle mit dem jeweiligen Rücklaufanschluss aus weiteren Längskanälen gebildet sind, die in die weitere Fluidkammer als einer weiteren Ringkammer ausmünden.

Bei einer weiteren bevorzugten Ausführungsform des erfindungsgemäßen Anschlussbauteils mit dem entsprechenden Ventil ist vorgesehen, dass die Betätigungsmagneteinrichtung als drückender Magnet ausgebildet ist, der mit Bestromen der Magnetspule den Magnetanker entgegen der Rückstellkraft eines Energiespeichers, vorzugsweise in Form einer Druckfeder, zusammen mit dem Ventilkolben in Richtung der einen Kolbenstellung verfährt, und im unbestromten Zustand mittels des Energiespeichers den Ventilkolben in die weitere Kolbenstellung aus der Ausgangsstellung bringt. Hierdurch wird nur im betätigten Aktuatorzustand die Betätigungsmagneteinrichtung bestromt und ansonsten in energiegünstiger Weise durch die Rückstellkraft des Energiespeichers der Ventilkolben in die weitere Kolbenstellung gebracht, bei dem der Nutzanschluss mit dem Rücklauf oder Tankanschluss fluidführend verbunden ist.

In besonders platzsparender Weise ist dabei vorgesehen, dass die Druckfeder mit ihrem einen freien Ende am Ventilgehäuse und mit ihrem anderen freien Ende am Ventilkolben angreift.

Für einen besonders montagefreundlichen Ein- oder Anbau des Ventilgehäuses an das Anschlussbauteil ist vorgesehen, dass das Ventilgehäuse mit allen Fluidkanälen und Fluidkammern als Einsatzteil konzipiert eine Flanschplatte als weiterem Gehäuseteil durchgreift, die mittels Befestigungsmitteln in zwei möglichen, um 180° voneinander verschiedenen Positionen am Anschlussbauteil, in der Art eines Ventilblockes konzipiert, festlegbar ist. Dergestalt ist der Monteur nur vor die Wahl gestellt, eine von zwei Einbaumöglichkeiten durchzuführen, wobei im Hinblick auf den vorgegebenen Belegungsplan es völlig egal ist, welche mögliche Montageposition er wählt, da in jedem Fall die einander zuordenbaren Fluidanschlussstellen miteinander verbunden werden und die in redundanter Weise nicht benötigten Anschlussstellen fluiddicht von Wandteilen des Anschlussbauteils verschlossen werden. Dank dieser Freiheit beim Zusammenbau lässt sich wesentliche Montagezeit einsparen.

Im Folgenden wird das erfindungsgemäße Anschlussbauteil mit dem entsprechenden anhand eines Ausführungsbeispiels nach der Zeichnung näher erläutert. Dabei zeigen in prinzipieller und nicht maßstäblicher Darstellung die
- Fig. 1: in abstrakter Form ein übliches Schaltplanzeichen für ein Ventil in Form eines elektrisch bestrombaren 3/2-Wegeventils;
- Fig. 2: in Seitenansicht ein Ventil nach der Fig. 1 mit einem sockelartigen Anschlussbauteil und darauf aufgesetztem Ventilgehäuse;
- Fig. 3: eine Draufsicht auf das Ventil nach der Fig. 2;
- Fig. 4: eine Unteransicht auf das Ventilgehäuse nach den Fig. 6 und 7 mit vorgebbarem Belegungsplan von Fluidanschlüssen;
- Fig. 5: eine Draufsicht auf das Anschlussbauteil mit korrespondierenden Anschlussstellen zu einem Teil der Fluidanschlüsse nach der Fig. 4; und
- Fig. 6 und 7: jeweils in der Art eines Längsschnittes, Ansichten von Teilen des Ventiles in unbetätigtem Zustand der Betätigungsmagneteinrichtung, einmal mit Druckversorgungsanschlüssen und einmal mit Rücklaufanschlüssen, die sich aus einer Darstellung senkrecht zur Zeichenebene nach der Fig. 6 in ebener Abwicklung nach der Fig. 7 ergeben.

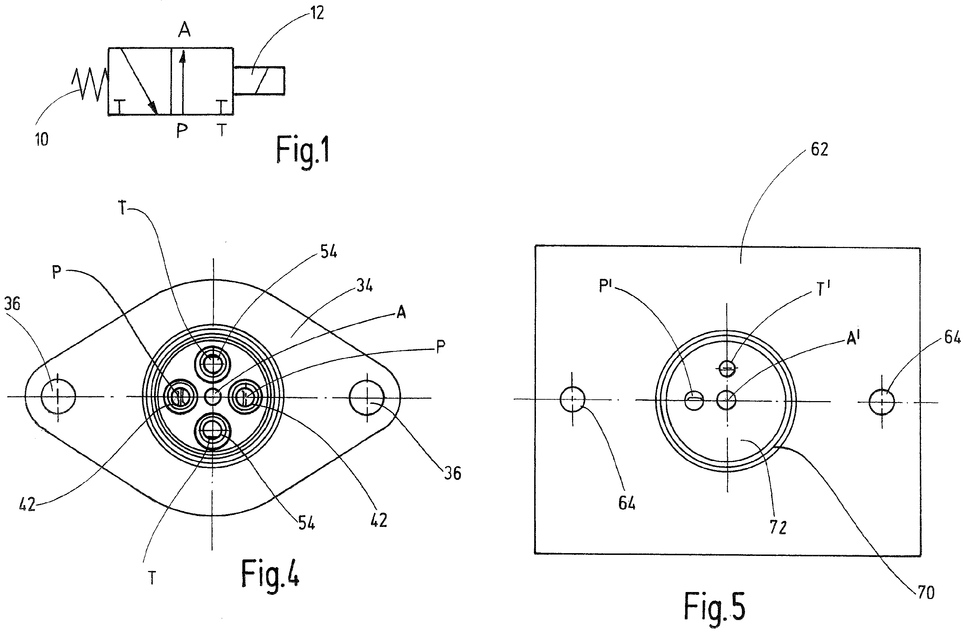

Das in Fig. 1 dargestellte Schaltplanzeichen betrifft ein 3/2-Wegeventil mit einem Druckversorgungsanschluss P, einem Nutzanschluss A und einem Rücklauf- oder Tankanschluss T, wobei das Ventil in der unbetätigten Stellung mittels eines Energiespeichers in Form einer Druckfeder 10 seine in Blickrichtung auf die Fig. 1 gesehen linke Schaltdarstellung einnimmt, bei der der Druckversorgungsanschluss P gesperrt und eine fluidführende Verbindung zwischen dem Nutzanschluss A und dem Rücklauf- oder Tankanschluss T hergestellt ist. Mittels einer auf diesem Gebiet üblichen elektrisch bestrombaren Betätigungsmagneteinrichtung 12 lässt sich das Ventil in seine in der Fig. 1 gezeigte rechte Schaltstellung bringen, bei der der Druckversorgungsanschluss P mit dem Nutzanschluss A und der Rücklauf- oder Tankanschluss T gesperrt ist. Ein 3/2-Wegeventil nach der Fig. 1 ist Stand der Technik und es wird im Folgenden erläutert, inwieweit sich das erfindungsgemäße Ventil von der bekannten Lösung nach Fig. 1 unterscheidet.

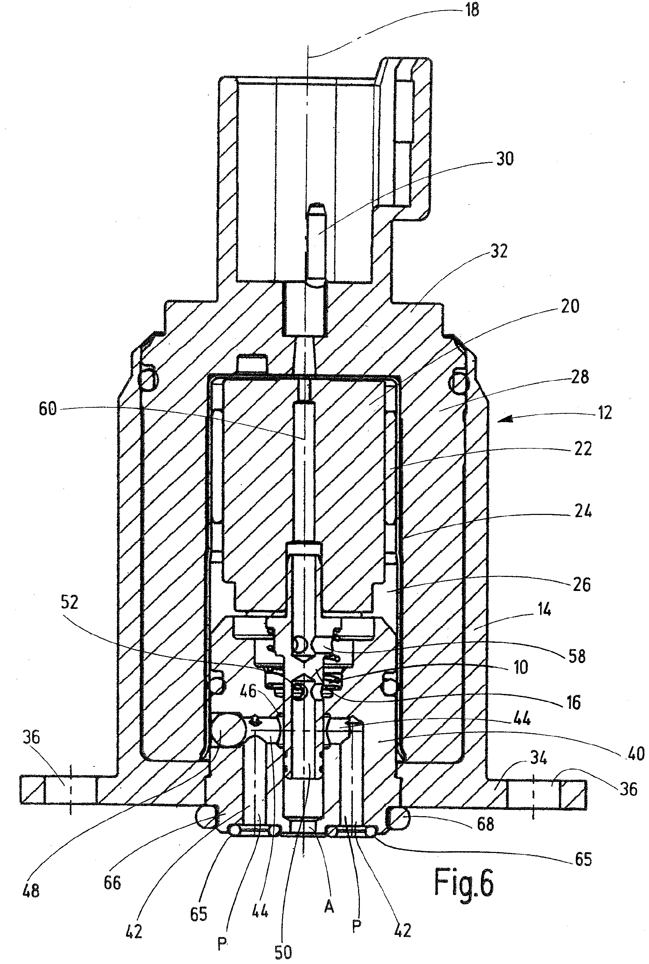

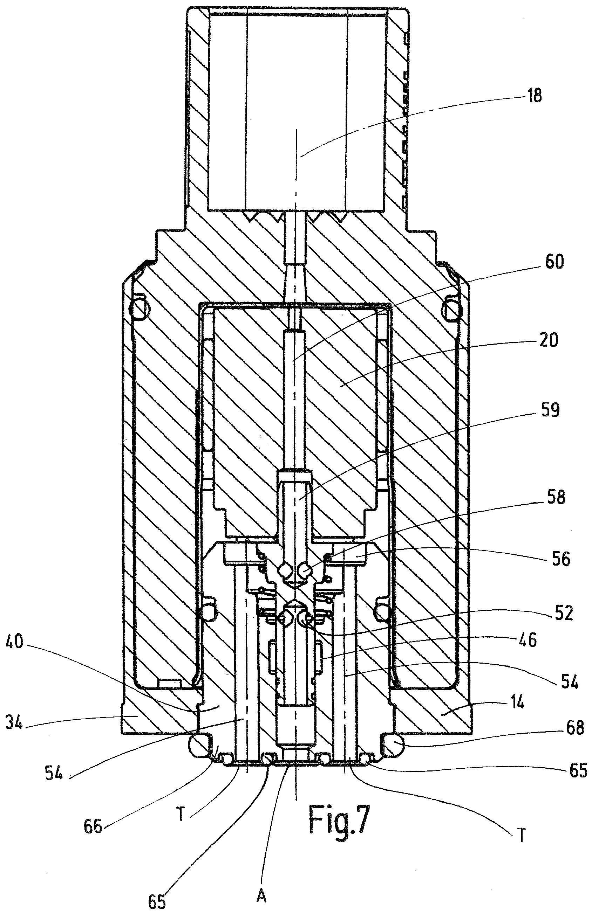

Wie insbesondere die Fig. 6 und 7 zeigen, weist das erfindungsgemäße Ventil ein Ventilgehäuse 14 auf mit einem darin längsverfahrbar geführten Ventilkolben 16, der mittels der Betätigungsmagneteinrichtung 12 zwischen einer ersten und einer zweiten Kolbenstellung entlang einer Betätigungsachse 18 verfahrbar ist, die der Längsachse des Ventiles entspricht. Zum Betätigen des Ventilkolbens 16 ist dieser mit einem Magnetanker 20 verbunden, der in Blickrichtung auf die Fig. 6 und 7 gesehen in seiner obersten, unbetätigten Stellung gezeigt ist. Der Magnetanker 20 ist entlang mindestens einer Lagerstelle, beispielsweise in Form einer Ringbuchse 22, innerhalb einer Druckhülse 24 geführt. Die Druckhülse 24 bildet eine geschlossene Anschlagfläche für den Magnetanker 20 aus und ist in Blickrichtung auf die Fig. 6 und 7 gesehen nach unten unter Bildung einer Art hohlzylindrischen Aufnahmeraumes 26 stirnseitig geöffnet.

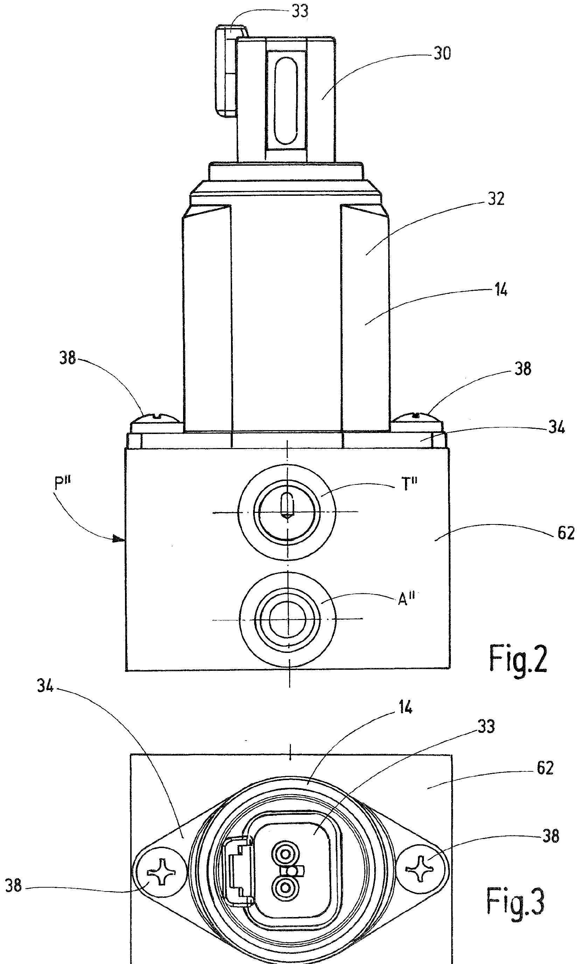

Die Druckhülse 24 ist von einer nicht näher dargestellten Spulenwicklung 28 eingefasst, bei deren Bestromung über ein elektrisches Steckerteil 30 der Magnetanker 20 entgegen der Kraftwirkung der Druckfeder 10 den Ventilkolben 16 in der Abwärtsbewegung mitnimmt. Dabei wird die Druckfeder 10 gespannt und sobald die Betätigungsmagneteinrichtung 12 nicht mehr bestromt wird, bringt die Druckfeder 10 den Magnetanker 20 in seine in den Fig. 6 und 7 gezeigte Ausgangsstellung zurück, bei der er mit seiner einen freien Stirnseite am Boden der Druckhülse 24 anschlägt. Insbesondere die stromführenden Teile der Spulenwicklung 28 sind von einer Vergussmasse 32 aus isolierendem Kunststoffmaterial umfasst, das auch die Umhausung für das elektrische Steckerteil 30 ausbildet und die Vergussmasse 32 ist in dem Ventilgehäuse 14 aufgenommen, das insoweit in der Art eines Aufnahmetopfes ausgebildet ist. Das Steckerteil 30 ist gemäß der Abbildung nach der Fig. 3 von einem klappbaren Deckelteil 33 bei Nichtgebrauch abdeckbar.

Das Ventilgehäuse 14 geht an seiner unteren Stirnseite einstückig in eine sich nach außen hin verbreiternde Flanschplatte 34 über mit zwei diametral zur Längsachse 18 einander gegenüberliegenden Durchgriffsstellen 36 in Form von Bohrungen (s. hierzu auch Fig. 4), die gemäß den Darstellungen nach den Fig. 2 und 3 von zwei Befestigungsmitteln 38 in Form von handelsüblichen Befestigungsschrauben durchgriffen sind. Das Ventilgehäuse 14 ist mehrteilig ausgebildet und weist als weiteren Bestandteil einen Gehäuseeinsatz 40 auf, der die freie Stirnseite der Flanschplatte 34 durchgreift und im hohlzylindrischen Aufnahmeraum 26 der Druckhülse 24 stationär festgelegt ist.

Wie die Fig. 6 zeigt, sind zwei diametral zur Längsachse 18 angeordnete Fluidkanäle 42 in Form von Längskanälen im Gehäuseeinsatz 40 respektive im Ventilgehäuse 14 eingebracht. Diese Fluidkanäle 42 bilden zwei Pumpen- oder Druckversorgungsanschlüsse P aus. An der freien Stirnseite des Ventilgehäuses 14 münden diese gemäß der Darstellung nach der Fig. 6 ins Freie und am gegenüberliegenden Ende münden diese jeweils in einen Querkanal 44 aus, der jeweils mit seinem freien Ende in eine Ring- oder Fluidkammer 46 ausmündet. Zum Einbringen der Querkanäle 44 dient eine Querbohrung, die nach außen hin im Gehäuseeinsatz 40 von einer Abschlusskugel 48 abgeschlossen ist und insoweit ist der jeweilige Querkanal 44 nach außen hin abgedichtet. Die Fluidkanäle 42 und Querkanäle 44 bilden insoweit einen Teil der Verbindungskanäle aus, die die Druckversorgung mit dem Nutzanschluss A verbinden, sofern der Ventilkolben 26 seine untere, eine Kolbenstellung einnimmt. Hierfür ist die Ringkammer 46 von dem Ventilkolben 16 durchgriffen, der wiederum einen Mitten- oder Verbindungskanal 50 aufweist, der eine fluidführende Verbindung zwischen dem im Ventilgehäuse 14 mittig angeordneten Nutzanschluss A und einer gegenüberliegenden Verbindungsstelle 52 herstellt, die aus mindestens einer den Ventilkolben 16 durchgreifenden Querbohrung gebildet ist.

Wird die Betätigungsmagneteinrichtung 12 bestromt, drückt der Magnetanker 20 in Blickrichtung auf die Fig. 6 gesehen den Ventilkolben 16 in seine untere Anschlagstellung, bei der der Magnetanker 16 in stirnseitige Anlage mit dem Gehäuseeinsatz 40 respektive mit dem Ventilgehäuse 14 kommt.

In der dahingehenden Betätigungsstellung ist dann eine fluidführende Verbindung zwischen dem Nutzanschluss A über den Mittenkanal 50, die querverlaufende Verbindungsstelle 52, die Ringkammer 46, die Querkanäle 44 und die Fluidkanäle 42 in Form der Längskanäle zu dem jeweiligen Druckversorgungsanschluss P hergestellt. In der dahingehenden Betätigungsstellung nimmt also das Ventil eine Schaltstellung ein, wie sie in der Fig. 1 rechts dargestellt ist mit der Maßgabe, dass zwei zur Betätigungsachse 18 einander diametral einander gegenüberliegende Druckversorgungsanschlüsse P vorgesehen sind, anstelle nur eines Druckversorgungsanschlusses P nach der Fig. 1.

Wie sich aus der Fig. 7 weiter ergibt, sind neben den beiden Druckversorgungsanschlüssen P in den Gehäuseeinsatz 40 als Teil des Ventilgehäuses 14 noch zwei Tank- oder Rücklaufanschlüsse T eingebracht. Diese bilden ein weiteres Paar von Fluidkanälen 54 aus, die parallel zur Betätigungsachse 18 verlaufen und die in axialer Richtung länger ausgebildet sind als das erste Paar von Fluidkanälen 42. Die beiden Fluidkanäle 54 münden mit ihrem oberen freien Ende in eine zweite Ring- oder Fluidkammer 56 aus, wobei die dahingehende Ringkammer 56 gestuft ausgebildet in zwei Abschnitte unterteilt und von der Druckfeder 10 durchgriffen ist. Die dahingehende Druckfeder 10 stützt sich mit ihrem einen freien Ende an einer Innenausnehmung im Gehäuseeinsatz 40 und mit ihrem anderen Ende an einer gestuften Verbreiterung am Ventilkolben 16 ab. Von der ersten Verbindungsstelle 52 mit axialem Abstand getrennt, ist in dem Ventilkolben 16 eine zweite Verbindungsstelle 58 vorhanden, die senkrecht auf der Zeichenebene nach der Fig. 7 eine Querkanalverbindung aufweist (siehe Fig. 6), die in die zweite Ring- oder Fluidkammer 56 ausmündet. Um einen hemmnisfreien Betrieb des Magnetankers 20 nebst des Ventilkolbens 16 zu ermöglichen, ist dieser in seinem oberen Bereich mit einem durchgehenden Mittenkanal 59 versehen, der in einen Mittenkanal 60 im Magnetanker 20 übergeht, der in der oberen Anschlagposition des Magnetankers 20 vom Boden der Druckhülse 24 übergriffen ist. Ist die Betätigungsmagneteinrichtung 12 als sogenannter drückender Magnet ausgebildet und nicht bestromt, ist der Magnetanker 20 aufgrund der Krafteinwirkung der Druckfeder 10 in seiner in der Fig. 7 oberen Position und es ist eine fluidführende Verbindung hergestellt zwischen den beiden Rücklaufanschlüssen T über die beiden Fluidkanäle 52, die zweite Fluidkammer 56 in die weitere zweite Verbindungsstelle 58 und damit in den Mittenkanal 60 des Magnetankers 20. Da gemäß der Darstellung nach den Fig. 6 und 7 in der oberen Position des Ventilkolbens 16 auch die erste Verbindungsstelle 52 in die zweite Fluidkammer 56 ausmündet, ist insoweit eine fluidführende Verbindung zwischen dem Nutzanschluss A und dem jeweiligen Rücklaufanschluss T hergestellt. Die insoweit als Längskanäle hergestellten, paarweise angeordneten Fluidkanäle 54 stehen, wie sich dies insbesondere aus der Fig. 4 ergibt, mit ihrer Anordnung senkrecht auf der Zeichenebene nach der Fig. 6.

Der jeweilige Ventilkörper nach den Fig. 6 und 7 mit der Betätigungsmagneteinrichtung 12 ist mit einem Anschlussbauteil 62 in Form eines Ventilblockes als dem weiteren Bestandteil des Ventils zu verbinden respektive anzuschließen. Wie die Draufsicht auf die Fig. 5 für das Anschlussbauteil 62 zeigt, ist dort ein Anschlussplan oder Belegungsplan vorgesehen mit einer mittig oder zentral angeordneten Nutzanschlussstelle A' sowie eine Druckversorgungsanschlussstelle P' und einer Rücklauf- oder Tankanschlussstelle T'. Des Weiteren weist das blockartig ausgebildete Anschlussbauteil 62 auf seiner Oberseite zwei Gewindeschraubstrecken 64 auf, die dem Flanschbild mit den beiden Durchgriffsstellen 36 nach der Fig. 4 entsprechen, so dass bei aufgesetzter Flanschplatte 34 auf der Oberseite des Anschlussbauteiles 62 die Durchgriffsstellen 36 deckungsgleich in Verbindung kommen mit den Gewindeschraubstrecken 64 zwecks Einschrauben der beiden zugehörigen Befestigungsschrauben 38.

Wie die Fig. 6 und 7 weiter zeigen, ist auf der Unterseite des Gehäuseeinsatzes 40 jeder Kanal P, T mit einer Außenringdichtung 65 versehen und des Weiteren springt der Gehäuseeinsatz 40 mit einem Absatz 66 über die Unterseite der Flanschplatte 34 vor. Dieser zylindrische Absatz 66 ist außenumfangsseitig von einem O-Dichtring 68 übergriffen, wobei der Absatz 66 mit Dichtring 68 bündig in die zugehörige Ringausnehmung 70 im Anschlussbauteil 62 im montierten Zustand gemäß der Darstellung nach der Fig. 2 in insoweit abgedichteter Weise eingreift.

Wie insbesondere die Belegungspläne nach den Fig. 4 und 5 verdeutlichen, ist es egal wie man die Flanschplatte 34 auf der Oberseite des Anschlussbauteiles 62 montiert; immer kommt dabei ein Anschluss eines Paares P oder T in fluidführende Verbindung mit der zuordenbaren Anschlussstelle P' oder T', wobei die jeweils verbleibenden, gleichfalls fluidführenden Anschlüsse P, T eines jeweiligen Paares von geschlossenen, nicht fluidführenden Wandteilen 72 des Anschlussbauteiles 62 im Bereich der möglichen Verbindung (Fig. 5) abgedeckt sind. Aufgrund der jeweiligen Ringdichtung 65 am freien stirnseitigen Ende der Paare von Anschlüssen P, T ist jedenfalls durch das Wandteil 72 eine Abdichtung im Bereich des Überganges zwischen Ventilgehäuse 14 und Anschlussbauteil 62 als weiterem Bestandteil des Ventils geschaffen. Des Weiteren ist der zentrale Nutzanschluss A des Ventilgehäuses 14 in deckungsgleicher Anlage mit der Nutzanschlussstelle A' des Anschlussbauteils 62. Für die dahingehende Anschlussfunktion ist bedeutsam, dass alle Anschlüsse A, P, T und alle Anschlussstellen A', P', T' jeweils senkrecht in einer Ebene zu der Betätigungsachse 18 angeordnet sind. Gemäß der Darstellung nach der Fig. 5 liegen die Anschlussstellen A' und P' in einer horizontalen Ebene mit den Einschraubstrecken 64 und T' verläuft hierzu senkrecht durch die Mittenachse der Anschlussstelle A'.

In Blickrichtung auf die Fig. 2 und 3 gesehen, spielt es also keine Rolle, ob das Ventilgehäuse 14 mit der Flanschplatte 34 wie dargestellt auf dem Anschlussbauteil 62 montiert ist oder um demgegenüber um 180°gewendeter Position. In jedem Fall kommt eine Anschlussstelle des Anschlussbauteils 62 in fluidführende Verbindung mit einem funktionsmäßig zugeordneten Anschluss im Ventilgehäuse 14 respektive im zugeordneten Gehäuseeinsatz 40. Dies stellt eine deutliche Erleichterung bei der Montage dar und Fehlfunktionen sind demgemäß ausgeschlossen.

Gemäß der Darstellung nach der Fig. 2 mündet die Anschlussstelle A' im Anschlussbauteil 62 als A" in einer Ebene unterhalb der Rücklauf- oder Tankanschlussstelle T' als T" aus und die Pumpenanschlussstelle P' ist als P" in derselben Höhe wie die Tankanschlussstelle T" in Blickrichtung auf die Fig. 2 gesehen links im Block 62 angeordnet. Die an den Seitenwänden austretenden Block-Anschlussstellen A2", T2" und P2" sind über nicht näher dargestellte Fluidkanäle im Anschlussbauteil 62 medienführend mit den zugeordneten Anschlussstellen A', T' und P' auf der Oberseite des Anschlussbauteils 62 gemäß dem Belegungsplan nach der Fig. 5 fluidführend verbunden.

Insgesamt wird also mit dem 3/2-Wegeventil mit bestromter Betätigungsstellung des Ventilkolbens 16 eine fluidführende Verbindung von einer externen Druckversorgung an P" über P' und P zum Block-Nutzanschluss A" hergestellt, über den dann freigegebenen einen Fluidweg A' und A oder im unbetätigten Zustand der Betätigungsmagneteinrichtung 12 bei abgesperrter Druckversorgung P" vom Block-Nutzanschluss A" über die Verbindung A' und A, T und T' zum Tank- oder Rücklaufanschluss T" im Anschlussbauteil 62. Die dahingehend redundante Fluidanschlusstechnologie hat so keine Entsprechung im Stand der Technik.

## Patentansprüche

1. Anschlussbauteil (62) mit einem Ventil, insbesondere 3/2-Wegeventil, mit einem Ventilgehäuse (14) und einem darin längsverfahrbar geführten Ventilkolben (16), der mittels einer Betätigungsmagneteinrichtung (12) zwischen einer ersten und einer zweiten Kolbenstellung entlang einer Betätigungsachse (18) verfahrbar ist, bei der eine Druckversorgung mit einem Nutzanschluss (A) fluidführend verbunden ist bzw. dieser Nutzanschluss (A) mit einem Rücklauf,
**dadurch gekennzeichnet,**
**dass** nach einem vorgebbaren Belegungsplan neben dem Nutzanschluss (A) mehrere Druckversorgungsanschlüsse (P) und mehrere Rücklaufanschlüsse (T) in mindestens einer Ebene quer zur Betätigungsachse (18) derart aus dem Ventilgehäuse (14) austreten,
**dass** unabhängig von einer gewählten möglichen Anschlussposition des Ventilgehäuses (14) an einem Anschlussbauteil (62) einzelne Anschlüsse (A, P, T) des Ventilgehäuses (14) in fluidführende Verbindung mit zuordenbaren Anschlussstellen (A', P', T') des Anschlussbauteils (66) kommen und die verbleibenden Anschlüsse (P, T) des Ventilgehäuses (14) fluiddicht von Wandteilen (72) des Anschlussbauteils (66) verschließbar sind; und
**dass** das Anschlussbauteil (62) den Belegungsplan mit einzelnen Anschlussstellen (A', P', T') aufweist, von denen sich eine Nutzanschlussstelle (A') an zentraler Stelle des Belegungsplans befindet und sich eine Druckversorgungsanschlussstelle (P') sowie eine Rücklaufanschlussstelle (T') von zentraler Stelle aus gesehen, auf einer horizontalen bzw. vertikal verlaufenden Ebene im Anschlussbauteil (62) befinden.

2. Anschlussbauteil mit einem Ventil nach Anspruch 1, **dadurch gekennzeichnet, dass** der
Ventilkolben (16) einen Verbindungskanal (50) aufweist, der an seiner dem Nutzanschluss (A) zugewandten Stirnseite in diesen in jeder Kolbenstellung ausmündet, und dass der Verbindungskanal (50) an seiner dieser Stirnseite abgewandten Seite eine Verbindungsstelle (52, 58) aufweist, die in der einen und der anderen Kolbenstellung in Verbindungskanäle im Ventilgehäuse (14) zum Druckversorgungsanschluss (P) bzw. zum Rücklaufanschluss (T) ausmündet.

3. Anschlussbauteil mit einem Ventil nach Anspruch 1 oder 2, **dadurch gekennzeichnet,**
**dass** das Ventilgehäuse (14) paarweise zu der Betätigungsachse (18) der Betätigungsmagneteinrichtung (12) diametral einander gegenüberliegende Fluidkanäle (42) aufweist, von denen ein Paar ausgehend von dem jeweiligen Druckversorgungsanschluss (P) zu einer Fluidkammer (46) im Ventilgehäuse (14) führt, in die die Verbindungsstelle (52) des Ventilkolbens (16) in der einen Kolbenstellung ausmündet,
und **dass** das andere Paar von Fluidkanälen (54) ausgehend vom Rücklaufanschluss (T) zu einer weiteren Fluidkammer (56) im Ventilgehäuse (14) führt, in die die Verbindungsstelle (58) des Ventilkolbens (16) in der weiteren Kolbenstellung ausmündet.

4. Anschlussbauteil mit einem Ventil nach einem der vorstehenden Ansprüche, **dadurch**
**gekennzeichnet, dass** der Nutzanschluss (A) koaxial zur Betätigungsachse (18) des Ventilkolbens (16) im Ventilgehäuse (14) angeordnet ist, und dass die weiteren Anschlüsse (P, T) in gleichen radialen Abständen voneinander um den Nutzanschluss (A) herumgruppiert sind.

5. Anschlussbauteil mit einem Ventil nach einem der vorstehenden Ansprüche, **dadurch**
**gekennzeichnet, dass** die Fluidkanäle (42) mit dem jeweiligen Druckversorgungsanschluss (P) aus Längskanälen im Ventilgehäuse (14) gebildet sind, die in Richtung der einen Fluidkammer (46) als Ringkammer in jeweils einen Querkanal (44) übergehen.

6. Anschlussbauteil mit einem Ventil nach einem der vorstehenden Ansprüche, **dadurch**
**gekennzeichnet, dass** die Fluidkanäle (54) mit dem jeweiligen Rücklaufanschluss (T) aus weiteren Längskanälen gebildet sind, die in die weitere Fluidkammer (56) als einer weiteren Ringkammer ausmünden.

7. Anschlussbauteil mit einem Ventil nach einem der vorstehenden Ansprüche, **dadurch**
**gekennzeichnet, dass** die Betätigungsmagneteinrichtung (12) als drückender Magnet ausgebildet ist, der mit Bestromen einer Spulenwicklung (28) einen Magnetanker (20) entgegen der Rückstellkraft eines Energiespeichers, vorzugsweise in Form einer Druckfeder (10), zusammen mit dem Ventilkolben (16) in Richtung der einen Kolbenstellung verfährt, und im unbestromten Zustand mittels des Energiespeichers den Ventilkolben (16) in die weitere Kolbenstellung aus der Ausgangsstellung bringt.

8. Anschlussbauteil mit einem Ventil nach Anspruch 7, **dadurch gekennzeichnet, dass** die
Druckfeder (10) mit ihrem einen freien Ende am Ventilgehäuse (14) und mit ihrem anderen freien Ende am Ventilkolben (16) angreift.

9. Anschlussbauteil mit einem Ventil nach einem der vorstehenden Ansprüche, **dadurch**
**gekennzeichnet, dass** ein Teil des Ventilgehäuses (14) mit allen Fluidkanälen (A, P, T) und Fluidkammern (46, 56) als Einsatzteil (40) konzipiert eine Flanschplatte (34) durchgreift, die mittels Befestigungsmitteln (38) in zwei möglichen, um 180° voneinander verschiedenen Positionen am Anschlussbauteil (62), in der Art eines Ventilblockes konzipiert, festlegbar ist.

## Claims

1. Connection component with a valve, in particular a 3/2 directional-control valve, having a valve housing (14) and a valve piston (16), which is guided so as to be longitudinally movable therein and can be moved by means of an actuating solenoid device (12) along an actuating axis (18) between a first and a second piston position, in which a pressure supply is connected to a work port (A) or this work port (A) is connected to a return in a fluid-conducting manner,
**characterised in that**
according to a predefinable assignment plan, in addition to the work port (A), a plurality of pressure supply ports (P) and a plurality of return ports (T) emerge from the valve housing (14) in at least one plane transverse to the actuating axis (18) in such a manner that, irrespective of a selected possible connection position of the valve housing (14) to a connection component (62), individual ports (A, P, T) of the valve housing (14) come into fluid-conducting connection with assignable connection points (A', P', T') of the connection component (66) and the remaining ports (P, T) of the valve housing (14) can be closed in a fluid-tight manner by wall parts (72) of the connection component (66); and **in that** the connection component (62) has the assignment plan with individual connection points (A', P', T'), of which a work port connection point (A') is located at the central point of the assignment plan and, viewed from the central point, a pressure supply port connection point (P') and a return port connection point (T') are located on a horizontal and vertical plane, respectively, in the connection component (62).

2. Connection component with a valve according to claim 1, **characterised in that** the valve piston (16) has a connecting channel (50) which, on its end face directed towards the work port (A), opens into this work port in each piston position, and **in that** the connecting channel (50) has, on its side directed away from this end face, a connecting point (52, 58) which, in the one and the other piston position opens into connecting channels in the valve housing (14) to the pressure supply port (P) or the return port (T), respectively.

3. Connection component with a valve according to claim 1 or 2, **characterised in that** the valve housing (14) has fluid channels (42), which are diametrically opposed in pairs to the actuating axis (18) of the actuating solenoid device (12), one pair of which channels leads, starting from the respective pressure supply port (P), to a fluid chamber (46) in the valve housing (14), into which fluid chamber the connecting point (52) of the valve piston (16) opens in the one piston position and **in that** the other pair of fluid channels (54), starting from the return port (T), leads to a further fluid chamber (56) in the valve housing (14), into which the connecting point (58) of the valve piston (16) opens in the further piston position.

4. Connection component with a valve according to one of the preceding claims, **characterised in that** the work port (A) is arranged coaxial with the actuating axis (18) of the valve piston (16) in the valve housing (14), and **in that** the further ports (P, T) are grouped around the work port (A) at equal radial distances from one another.

5. Connection component with a valve according to one of the preceding claims, **characterised in that** the fluid channels (42) with the respective pressure supply port (P) are formed from longitudinal channels in the valve housing (14), which merge towards the one fluid chamber (46), as an annular chamber, into a transverse channel (44) in each case.

6. Connection component with a valve according to one of the preceding claims, **characterised in that** the fluid channels (54) with the respective return port (T) are formed from further longitudinal channels, which open into the further fluid chamber (56) as a further annular chamber.

7. Connection component with a valve according to one of the preceding claims, **characterised in that** the actuating solenoid device (12) is configured as a push-type solenoid which, when a coil winding (28) is energised, moves a solenoid armature (20) against the restoring force of an energy accumulator, preferably in the form of a compression spring (10), together with the valve piston (16) towards the one piston position and, in the de-energised state, moves the valve piston (16) from the starting position to the further piston position by means of the energy accumulator.

8. Connection component with a valve according to claim 7, **characterised in that** the compression spring (10) engages with its one free end on the valve housing (14) and with its other free end on the valve piston (16).

9. Connection component with a valve according to one of the preceding claims, **characterised in that** part of the valve housing (14) with all fluid channels (A, P, T) and fluid chambers (46, 56), designed as an insert part (40), passes through a flange plate (34), which can be fixed to the connection component (62), designed in the manner of a valve block, in two possible positions which differ from each other by 180°, by means of fastening means (38).

## Revendications

1. Composant (62) de raccordement ayant une soupape, en particulier une soupape à 3/2 voies, comprenant un corps (14) de soupape et un piston (16) de soupape, qui y est guidé avec possibilité de se déplacer longitudinalement et qui, au moyen d'un dispositif (12) magnétique d'actionnement, peut être déplacé entre une première et une deuxième positions de piston le long d'un axe (18) d'actionnement, une alimentation en pression communiquant fluidiquement avec un raccord (A) utile ou ce raccord (A) utile avec un retour,
**caractérisé**
**en ce que**, suivant un plan d'occupation pouvant être donné à l'avance, outre le raccord (A) utile, plusieurs raccords (P) d'alimentation en pression et plusieurs raccords (T) de retour sortent du corps (14) de la soupape dans au moins un plan transversalement à l'axe (18) d'actionnement, de manière à ce que, indépendamment d'une position de raccordement possible sélectionnée du corps (14) de la soupape sur un composant (62) de raccordement, divers raccords (A, P, T) du corps (14) de la soupape viennent en communication fluidique avec des points (A', P', T') de raccordement pouvant être associés du composant (66) de raccordement et les raccords (P, T) restant du corps (14) de la soupape peuvent être fermés d'une manière étanche au fluide par des parties (72) de paroi du composant (66) de raccordement ; et
**en ce que** le composant (62) de raccordement comporte le plan d'occupation ayant divers points (A', P', T') de raccordement, dont un point (A') de raccordement utile se trouve en un point central du plan d'occupation et un point (P') de raccordement d'alimentation en pression ainsi qu'un point (T') de raccordement de retour se trouvent, considéré à partir du point central, sur un plan s'étendant horizontalement ou respectivement verticalement du composant (62) de raccordement.

2. Composant de raccordement ayant une soupape suivant la revendication 1, **caractérisé**
**en ce que** le piston (16) a un conduit (50) de communication, qui, sur son côté frontal tourné vers le raccord (A) utile, débouche dans celui-ci dans chaque position du piston, et **en ce que** le conduit (50) de communication a, sur son côté non tourné vers ce côté frontal, un point (52, 58) de communication, qui, dans la une et l'autre position du piston, débouche dans des conduits de communication du corps (14) de la soupape menant au raccord (P) d'alimentation en pression et respectivement au raccord (T) de retour.

3. Composant de raccordement ayant une soupape suivant la revendication 1 ou 2, **caractérisé**
**en ce que** le corps (14) de la soupape a par paires des conduits (42) pour du fluide diamétralement opposés l'un à l'autre par rapport à l'axe (18) d'actionnement du dispositif (12) magnétique d'actionnement, dont une paire conduit, à partir du raccord (P) d'alimentation en pression respectif, à une chambre (46) pour du fluide dans le corps (14) de la soupape, chambre dans laquelle débouche, dans la une position du piston, le point (52) de communication du piston (16) de la soupape, et **en ce que** l'autre paire de canaux (54) pour du fluide conduit du raccord (T) de retour à une autre chambre (56) pour du fluide dans le corps (14) de la soupape, chambre dans laquelle le point (58) de communication du piston (16) de la soupape débouche dans l'autre position du piston.

4. Composant de raccordement ayant une soupape suivant l'une des revendications précédentes, **caractérisé**
**en ce que** le raccord (A) utile est disposé coaxialement à l'axe (18) d'actionnement du piston (16) de la soupape dans le corps (14) de la soupape, et **en ce que** les autres raccords (P, T) sont regroupés à de mêmes distances radiales les uns des autres autour du raccord (A) utile.

5. Composant de raccordement ayant une soupape suivant l'une des revendications précédentes, **caractérisé**
**en ce que** les canaux (42) pour du fluide sont, avec le raccord (P) d'alimentation en pression respectif, formés de conduits longitudinaux dans le corps (14) de la soupape, qui, dans la direction de la une chambre (46) pour du fluide sous la forme d'une chambre annulaire, se transforment en respectivement un conduit (44) transversal.

6. Composant de raccordement ayant une soupape suivant l'une des revendications précédentes, **caractérisé**
**en ce que** les conduits (54) pour du fluide avec le raccord (T) de retour respectif sont formés d'autres conduits longitudinaux, qui débouchent dans l'autre chambre (56) pour du fluide sous la forme d'une autre chambre annulaire.

7. Composant de raccordement ayant une soupape suivant l'une des revendications précédentes, **caractérisé**
**en ce que** le dispositif (12) magnétique d'actionnement est constitué sous la forme d'un aimant de poussée, qui, par l'alimentation en courant d'un enroulement (28) de bobine, déplace en direction de la une position du piston une armature (20) d'aimant à l'encontre de la force de rappel d'un accumulateur d'énergie, de préférence sous la forme d'un ressort (10) de compression, ensemble avec le piston (16) de la soupape et, dans l'état non alimenté en courant, met, au moyen de l'accumulateur d'énergie, le piston (16) de la soupape dans l'autre position du piston à partir de la position de départ.

8. Composant de raccordement ayant une soupape suivant la revendication 7, **caractérisé**
**en ce que** le ressort (10) de compression attaque, par sa une extrémité libre, le corps (14) de la soupape et, par son autre extrémité libre, le piston (16) de la soupape.

9. Composant de raccordement ayant une soupape suivant l'une des revendications précédentes, **caractérisé**
**en ce qu'**une partie du corps (14) de la soupape, conçue avec tous les conduits (A, P, T) pour du fluide et les chambres (46, 56) pour du fluide sous la forme d'une pièce (40) rapportée, traverse une plaque (34) de bridage, qui peut être fixée au moyen de moyens (38) de fixation dans deux positions possibles, différentes l'une de l'autre de 180°, au composant (62) de raccordement, conçu à la manière d'un bloc-soupape.
